# EUROPEAN PATENT APPLICATION

(11) **EP 4 675 939 A1**
(43) Date of publication of application: **07.01.2026**
(21) Application number: 23925019.4
(22) Date of filing: 24.11.2023
(51) Int. Cl.: H04B 7/185

(54) **ACCESS METHOD FOR MULTI-SATELLITE COOPERATIVE COMMUNICATION, AND SATELLITE COMMUNICATION SYSTEM**

(30) Priority: 02.03.2023 CN 202310194363
(71) Applicant: IPlook Networks Co., Ltd., Guangzhou, Guangdong 510000 (CN)
(72) Inventor: WU, Yunpu, Guangzhou, Guangdong 510000 (CN); LU, Lifang, Guangzhou, Guangdong 510000 (CN); XIE, Wanyi, Guangzhou, Guangdong 510000 (CN); YANG, Yang, Guangzhou, Guangdong 510000 (CN); MO, Wangtao, Guangzhou, Guangdong 510000 (CN); CHEN, Ruolan, Guangzhou, Guangdong 510000 (CN)
(74) Representative: Meyer, Thorsten
(86) International application number: PCT/CN2023/134056
(87) International publication number: WO 2024/179069

(57) **Abstract**

An access method for multi-satellite cooperative communication, and a satellite communication system, comprises: a satellite terminal determining a primary satellite base station and a secondary satellite base station from among several satellite base stations, and sending, to the primary satellite base station and the secondary satellite base station, first information which comprises respective identity identification information of the primary satellite base station and the secondary satellite base station; the primary satellite base station and the secondary satellite base station respectively determining the identity of each other, and establishing a communication connection; the primary satellite base station and the secondary satellite base station respectively allocating a first terminal identifier and a second terminal identifier to the satellite terminal; the primary satellite base station sending registration information to a core network, wherein the registration information comprises the first terminal identifier, the second terminal identifier and the first information; and the core network determining the primary satellite base station, the secondary satellite base station and the satellite terminal according to the registration information, and sending context information of the satellite terminal to the primary satellite base station, and the secondary satellite base station synchronizing the context information. In the present application, a plurality of satellite base stations can serve the satellite terminal, thereby facilitating an improvement in the communication transmission efficiency.

## Description

### TECHNICAL FIELD

The present application relates to the field of satellite communication technology, and specifically to an access method for multi-satellite cooperative communication and a satellite communication system.

### BACKGROUND

The technical concept of "6G = 5G + satellite network" has recently emerged, which aims to realize 6G networks by integrating satellite mobile networks with 5G mobile networks. The underlying technical idea is to leverage the advantages of low-earth orbit satellite mobile networks to compensate for the shortcomings of mobile networks like 5G. For instance, it seeks to extend mobile communication signals to cover aerial, marine, forest, desert areas, and other regions with sparse population, thereby achieving true global communication. However, satellite mobile networks also present a series of drawbacks, such as communication distance, power density, and multi-antenna deployment limitations. These constraints significantly restrict satellite mobile network communications, resulting in a spectral efficiency far lower than that of contemporary cellular mobile communication systems. Therefore, integrating terrestrial mobile networks with satellite mobile networks can fully utilize the advantages of satellite networks while mitigating the impact of their disadvantages.

In current satellite communications, however, a satellite terminal typically establishes a communication link with only a single satellite, meaning data services are provided by just one satellite, leading to low data transmission efficiency. When a satellite terminal is equipped with multiple antennas, it has the potential to utilize multiple satellites simultaneously for service provision. Nevertheless, how to enable the access of multiple satellites to both the satellite terminal and the core network remains a critical problem urgently needing a solution in the industry.

### SUMMARY OF THE INVENTION

Objectives of the present application are to provide an access method for multi-satellite cooperative communication and a satellite communication system, which enables multiple satellite base stations to serve a satellite terminal, thereby facilitating improved communication transmission efficiency.

To achieve the aforesaid objective, the present application provides an access method for multi-satellite cooperative communication, including:
determining, by a satellite terminal, a primary satellite base station and a secondary satellite base station from a plurality of satellite base stations;
transmitting, by the satellite terminal, first information to the primary satellite base station and the secondary satellite base station, wherein the first information includes identity information of the primary satellite base station and the secondary satellite base station;
determining, by the primary satellite base station and the secondary satellite base station, an identity of each other according to the first information, and establishing a communication connection;
allocating, by the primary satellite base station, a first terminal identifier to the satellite terminal, allocating, by the secondary satellite base station, a second terminal identifier to the satellite terminal, and transmitting the second terminal identifier to the primary satellite base station;
transmitting, the primary satellite base station, registration information to a core network, wherein the registration information includes a first terminal identifier, a second terminal identifier, and the first information; and
determining, by the core network, the primary satellite base station, the secondary satellite base station, and the satellite terminal according to the registration information, and transmitting context information corresponding to the satellite terminal to the primary satellite base station, wherein the secondary satellite base station synchronizes the context information.

Optionally, said "determining, by a satellite terminal, a primary satellite base station and a secondary satellite base station from a plurality of satellite base stations" includes:
acquiring, by the satellite terminal, access parameters of the plurality of satellite base stations, wherein the access parameters include at least one of ephemeris information and elevation angle information;
determining an access priority level for each of the satellite base stations according to the access parameters; and
determining the primary satellite base station and the secondary satellite base station based on the access priority level of each of the satellite base stations, wherein the access priority level of the primary satellite base station is higher than that of the secondary satellite base station, and the access priority level of the secondary satellite base station is higher than that of other satellite base stations excluding the primary satellite base station.

Optionally, the access method further includes: when a target satellite base station exists in the plurality of satellite base stations, and the access priority level of the target satellite base station is higher than that of the primary satellite base station or that of the secondary satellite base station, initiating, by the satellite terminal, a handover request to replace the primary satellite base station or the secondary satellite base station with the target satellite base station.

Optionally, the access method further includes:
upon completion of replacement, initiating, by the target satellite base station, a resource configuration request to the primary satellite base station or the secondary satellite base station that is replaced; and
releasing, by the primary satellite base station or the secondary satellite base station that is replaced, resources according to the resource configuration request.

Optionally, when the access priority level of the target satellite base station is between that of the secondary satellite base station and that of the primary satellite base station, performing the following steps to replace the secondary satellite base station with the target satellite base station:
initiating, by the satellite terminal, a first handover request to the primary satellite base station, wherein the first handover request carries identity information of the target satellite base station;
initiating, by the primary satellite base station, a second handover request to the secondary satellite base station, wherein the second handover request carries identity information of the satellite terminal and the target satellite base station;
determining, by the secondary satellite base station, the target satellite base station from the satellite base stations according to the identity information of the target satellite base station, and transmitting the context information to the target satellite base station; and
transmitting, by the primary satellite base station, second information to the core network to cause a data link between the core network and the secondary satellite base station to be handed over to the target satellite base station, wherein the second information includes the first terminal identifier, a third terminal identifier allocated to the satellite terminal by the target satellite base station, and identity information of the primary satellite base station and the target satellite base station.

Optionally, when the access priority level of the target satellite base station is higher than that of the primary satellite base station, performing the following steps to replace the primary satellite base station with the target satellite base station:
initiating, by the satellite terminal, a third handover request to the primary satellite base station, wherein the third handover request carries identity information of the target satellite base station;
determining, by the primary satellite base station, the target satellite base station from the satellite base stations according to the identity information of the target satellite base station, and transmitting the context information to the target satellite base station; and
transmitting, by the target satellite base station, third information to the core network to cause a data link between the core network and the primary satellite base station to be handed over to the target satellite base station, wherein the third information includes the second terminal identifier, a fourth terminal identifier allocated to the satellite terminal by the target satellite base station, and identity information of the target satellite base station and the secondary satellite base station.

Optionally, when the target satellite base station includes a first satellite base station and a second satellite base station, the access priority level of the first satellite base station is higher than that of the primary satellite base station, and the access priority level of the second satellite base station is between that of the secondary satellite base station and that of the primary satellite base station, performing the following steps to replace the primary satellite base station with the first satellite base station and replace the secondary satellite base station with the second satellite base station:
initiating, by the satellite terminal, a fourth handover request to the primary satellite base station, wherein the fourth handover request includes identity information of the first satellite base station and the second satellite base station;
determining, by the primary satellite base station, the first satellite base station and the second satellite base station from the satellite base stations according to the identity information of the first satellite base station and the second satellite base station, and transmitting the context information to the first satellite base station and the second satellite base station; and
transmitting, by the first satellite base station, fourth information to the core network to cause a data link between the core network and the primary satellite base station to be handed over to the first satellite base station and a data link between the core network and the secondary satellite base station to be handed over to the second satellite base station, wherein the fourth information includes a fifth terminal identifier allocated to the satellite terminal by the first satellite base station, a sixth terminal identifier allocated to the satellite terminal by the second satellite base station, and identity information of the first satellite base station and the second satellite base station.

To achieve the aforesaid objective, the present application further provides a satellite communication system, configured to perform the access method for multi-satellite cooperative communication according to any one of claims 1-7.

To achieve the aforesaid objective, the present application further provides an electronic device including a processor; and a memory, having executable instructions of the processor stored therein; wherein the processor is configured to perform the access method for multi-satellite cooperative communication according to any one of claims 1-7 by executing the executable instructions.

To achieve the aforesaid objective, the present application further provides a computer-readable storage medium, having a program stored thereon, wherein the program, when executed by a processor, implements the access method for multi-satellite cooperative communication mentioned above.

The present application further provides a computer program product or a computer program, including computer instructions stored on a computer-readable storage medium. The processor of an electronic device reads the computer instructions from the computer-readable storage medium, and the execution of these computer instructions by the processor causes the electronic device to perform the access method for multi-satellite cooperative communication mentioned above.

The satellite terminal of the present application can determine and acquire the respective identity information of the primary satellite base station and the secondary satellite base station from among several satellite base stations, and transmit the identity information to the primary satellite base station and the secondary satellite base station. In such a way, the primary satellite base station and the secondary satellite base station can identify each other and establish a communication connection therebetween. The primary satellite base station and the secondary satellite base station allocate the first terminal identifier and the second terminal identifier to the satellite terminal, respectively. The secondary satellite base station then sends the second terminal identifier to the primary satellite base station. The primary satellite base station transmits registration information including the first terminal identifier, the second terminal identifier, and the identity information to the core network. Upon receiving the registration information, the core network determines the primary satellite base station, the secondary satellite base station, and the satellite terminal to be accessed based on the registration information and proceeds with registration. The core network sends context information corresponding to the satellite terminal to the primary satellite base station, and the secondary satellite base station synchronizes the context information to ensure the consistency, thereby facilitating the service provision for the satellite terminal. The present application provides an access method for realizing multi-satellite communication for a satellite communication system, enabling multiple satellite base stations to serve the satellite terminal, which is beneficial for improving communication transmission efficiency.

### BRIEF DESCRIPTION OF THE DRAWINGS

FIG. 1 is a flowchart of an access method for multi-satellite cooperative communication according to an embodiment of the present application.
FIG. 2 is a signaling diagram of an access method for multi-satellite cooperative communication according to an embodiment of the present application.
FIG. 3 is a signaling diagram involving satellite base station handover in multi-satellite communication according to an embodiment of the present application.
FIG. 4 is a signaling diagram involving satellite base station handover in multi-satellite communication according to another embodiment of the present application.
FIG. 5 is a signaling diagram involving satellite base station handover in multi-satellite communication according to yet another embodiment of the present application.
FIG. 6 is a system architecture diagram of a satellite communication system according to an embodiment of the present application.
FIG. 7 is a schematic block diagram of an electronic device according to an embodiment of the present application.

### DETAILED DESCRIPTION OF ILLUSTRATED EMBODIMENTS

To detail the technical content, objectives, and effects achieved by the present application, the following description is provided in conjunction with embodiments and the accompanying drawings.

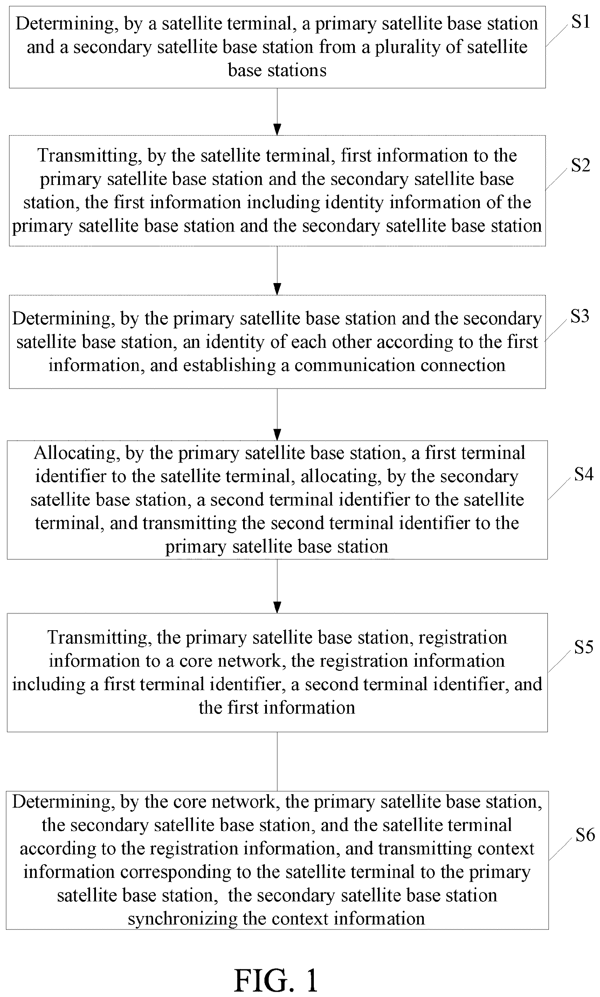

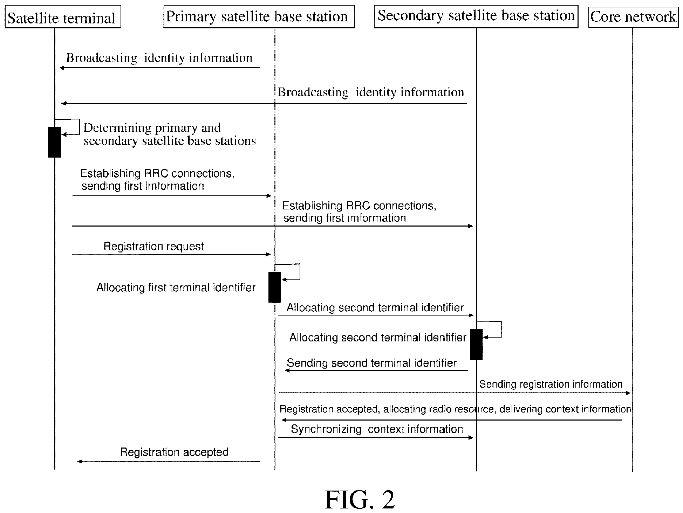

Referring to FIGS. 1 and 2, the present application discloses an access method for multi-satellite cooperative communication, including the following steps:
S1, determining, by a satellite terminal, a primary satellite base station and a secondary satellite base station from a plurality of satellite base stations;
S2, transmitting, by the satellite terminal, first information to the primary satellite base station and the secondary satellite base station, the first information including identity information of the primary satellite base station and the secondary satellite base station;
S3, determining, by the primary satellite base station and the secondary satellite base station, an identity of each other according to the first information, and establishing a communication connection;
S4, allocating, by the primary satellite base station, a first terminal identifier to the satellite terminal, allocating, by the secondary satellite base station, a second terminal identifier to the satellite terminal, and transmitting the second terminal identifier to the primary satellite base station;
S5, transmitting, the primary satellite base station, registration information to a core network, the registration information including a first terminal identifier, a second terminal identifier, and the first information; and
S6, determining, by the core network, the primary satellite base station, the secondary satellite base station, and the satellite terminal according to the registration information, and transmitting context information corresponding to the satellite terminal to the primary satellite base station, wherein the secondary satellite base station synchronizes the context information.

The satellite terminal of the present application can determine and acquire the respective identity information of the primary satellite base station and the secondary satellite base station from among several satellite base stations, and transmit the identity information to the primary satellite base station and the secondary satellite base station. In such a way, the primary satellite base station and the secondary satellite base station can identify each other and establish a communication connection therebetween. The primary satellite base station and the secondary satellite base station allocate the first terminal identifier and the second terminal identifier to the satellite terminal, respectively. The secondary satellite base station then sends the second terminal identifier to the primary satellite base station. The primary satellite base station transmits registration information including the first terminal identifier, the second terminal identifier, and the identity information to the core network. Upon receiving the registration information, the core network determines the primary satellite base station, the secondary satellite base station, and the satellite terminal to be accessed based on the registration information and proceeds with registration. The core network sends context information corresponding to the satellite terminal to the primary satellite base station, and the secondary satellite base station synchronizes the context information to ensure the consistency, thereby facilitating the service provision for the satellite terminal. The present application provides an access method for realizing multi-satellite communication for a satellite communication system, enabling multiple satellite base stations to serve the satellite terminal, which is beneficial for improving communication transmission efficiency.

It should be understood that the satellite terminal may be equipped with multiple antennas, thereby communicating with multiple satellite base stations.

It should be understood that the number of the primary and secondary satellite base stations determined by the satellite terminal is not specifically limited in the present application, as long as there is at least one primary satellite base station and at least one secondary satellite base station.

Specifically, during operation, a satellite base station broadcasts its own identity information (namely its satellite base station ID). After establishing RRC connections with the primary and secondary satellite base stations, the satellite terminal can integrate the received identity information broadcast by the primary and secondary satellite base stations into first information and send the first information to the primary satellite base station and the secondary satellite base station, respectively. The primary satellite base station determines, based on the first information, that it is the primary satellite base station and identifies the secondary satellite base station among the plurality of satellite base stations. The secondary satellite base station determines, based on the first information, that it is the secondary satellite base station and identifies the primary satellite base station among the plurality of satellite base stations. Subsequently, the primary satellite base station and the secondary satellite base station establish a communication connection through Xn message interaction.

It should be understood that after the communication connection is established between the primary and secondary satellite base stations, the satellite terminal initiates a registration request to the primary satellite base station. The primary satellite base station then requests the secondary satellite base station to determine the second terminal identifier and also determines the first terminal identifier itself. Herein, both the first terminal identifier and the second terminal identifier are RAN-UE-NGAP-IDs, allocated to the satellite terminal by the primary and secondary satellite base stations, respectively. In such a way, the primary and secondary satellite base stations can identify the satellite terminal to be served, thereby preventing information confusion during communication when multiple satellite terminals are present.

Furthermore, the primary satellite base station can integrate the first information, the first terminal identifier, and the second terminal identifier into registration information and send it to the core network. Based on the registration information, the core network can identify the primary satellite base station, secondary satellite base station, and satellite terminal to be registered, initiate the registration process and radio resource allocation, and deliver the context information corresponding to the satellite terminal to the primary satellite base station. The primary satellite base station then sends the context information to the secondary satellite base station so that the secondary satellite base station synchronizes the context information of the primary satellite base station. After the primary satellite base station and the secondary satellite base station synchronize the context information, the primary satellite base station sends a registration complete message to the satellite terminal.

Referring to FIG. 2, in some embodiments, the step S1 includes:
acquiring, by the satellite terminal, access parameters of the plurality of satellite base stations, wherein the access parameters include at least one of ephemeris information and elevation angle information;
determining an access priority level for each of the satellite base stations according to the access parameters; and
determining the primary satellite base station and the secondary satellite base station based on the access priority level of each satellite base station, wherein the access priority level of the primary satellite base station is higher than that of the secondary satellite base station, and the access priority level of the secondary satellite base station is higher than that of other satellite base stations excluding the primary satellite base station.

Specifically, to improve the communication quality between the satellite terminal and the satellite base stations, the primary and secondary satellite base stations should be the ones with the best communication quality among the plurality of satellite base stations. Therefore, by acquiring access parameters of the satellite base stations, such as ephemeris information and elevation angle information, the access priority level of each satellite base station can be determined. Specifically, a satellite base station with higher communication quality has a higher access priority level.

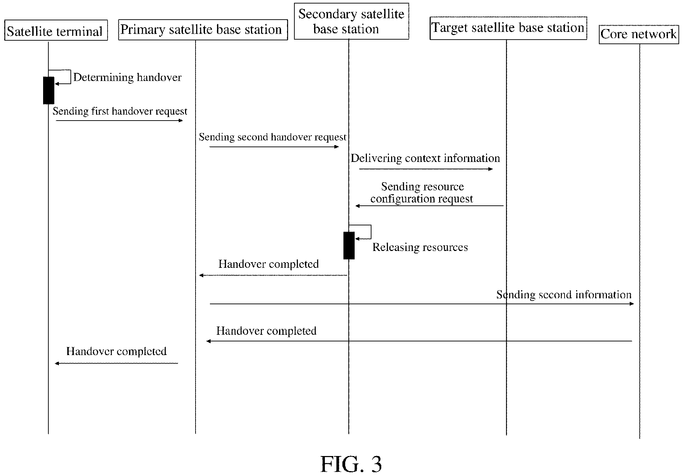

Referring to FIGS. 3 to 5, furthermore, the access method for multi-satellite cooperative communication of the present application further includes the following steps: when a target satellite base station exists in the plurality of satellite base stations, and the access priority level of the target satellite base station is higher than that of the primary satellite base station or that of the secondary satellite base station, initiating, by the satellite terminal, a handover request to replace the primary satellite base station or the secondary satellite base station with the target satellite base station.

By replacing the corresponding primary or secondary satellite base station with the target satellite base station when its access priority level is higher, the optimal communication state between the satellite terminal and the satellite base stations can be maintained consistently.

Specifically, the satellite terminal may determine the satellite base station with the access priority level immediately following those of the primary and secondary satellite base stations as a backup satellite base station. If the access priority level of the backup satellite base station becomes higher than that of the primary or secondary satellite base station, the primary satellite base station or the secondary satellite base station will be replaced with the target satellite base station.

Referring to FIGS. 3 to 5, in some embodiments, the access method for multi-satellite cooperative communication of the present application further includes:
upon completion of replacement, initiating, by the target satellite base station, a resource configuration request to the primary satellite base station or the secondary satellite base station that is replaced; and
releasing, by the primary satellite base station or the secondary satellite base station that is replaced, resources according to the resource configuration request.

As such, releasing the resources of the replaced primary or secondary satellite base station helps avoid occupation of satellite base station resources.

Referring to FIG. 3, specifically, when the access priority level of the target satellite base station is between the access priority level of the secondary satellite base station and the access priority level of the primary satellite base station, the following steps are performed to replace the secondary satellite base station with the target satellite base station:
initiating, by the satellite terminal, a first handover request to the primary satellite base station, wherein the first handover request carries identity information of the target satellite base station;
initiating, by the primary satellite base station, a second handover request to the secondary satellite base station, wherein the second handover request carries identity information of the satellite terminal and the target satellite base station;
determining, by the secondary satellite base station, the target satellite base station from the satellite base stations according to the identity information of the target satellite base station, and transmitting the context information to the target satellite base station; and
transmitting, by the primary satellite base station, second information to the core network to cause a data link between the core network and the secondary satellite base station to be handed over to the target satellite base station, wherein the second information includes the first terminal identifier, a third terminal identifier allocated to the satellite terminal by the target satellite base station, and identity information of the primary satellite base station and the target satellite base station.

Furthermore, the first handover information may also include identity information of the primary satellite base station. The primary satellite base station determines whether the satellite base station to be replaced is the primary or the secondary satellite base station based on the first handover information. If the first handover information includes only the identity information of the primary satellite base station and the target satellite base station, it can be determined that the satellite base station to be replaced is the secondary satellite base station. The primary satellite base station then transmits the corresponding context information to the target satellite base station, enabling the primary satellite base station and the target satellite base station to jointly provide services for the satellite terminal.

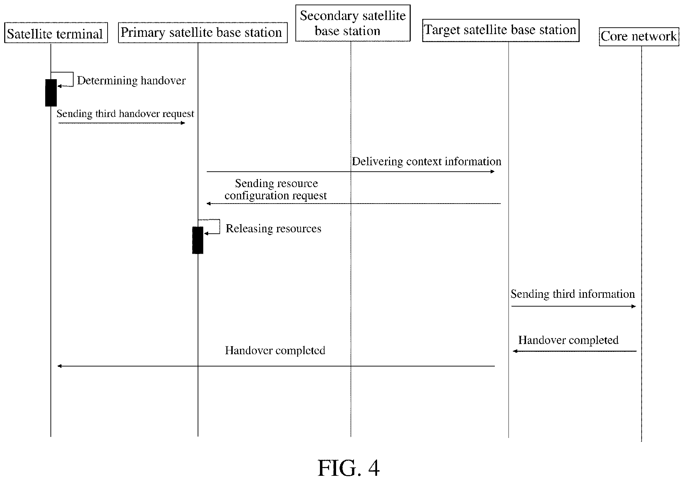

Referring to FIG. 4, specifically, when the access priority level of the target satellite base station is higher than the access priority level of the primary satellite base station, the following steps are performed to replace the primary satellite base station with the target satellite base station:
initiating, by the satellite terminal, a third handover request to the primary satellite base station, wherein the third handover request carries identity information of the target satellite base station;
determining, by the primary satellite base station, the target satellite base station from the satellite base stations according to the identity information of the target satellite base station, and transmitting the context information to the target satellite base station; and
transmitting, by the target satellite base station, third information to the core network to cause a data link between the core network and the primary satellite base station to be handed over to the target satellite base station, wherein the third information includes the second terminal identifier, a fourth terminal identifier allocated to the satellite terminal by the target satellite base station, and identity information of the target satellite base station and the secondary satellite base station.

Furthermore, the third handover information may also include identity information of the secondary satellite base station. The primary satellite base station determines whether the satellite base station to be replaced is the primary or the secondary satellite base station based on the third handover information. If the third handover information includes only the identity information of the secondary satellite base station and the target satellite base station, it can be determined that the satellite base station to be replaced is the primary satellite base station. The primary satellite base station then transmits the corresponding context information to the target satellite base station, enabling the secondary satellite base station and the target satellite base station to jointly provide services for the satellite terminal.

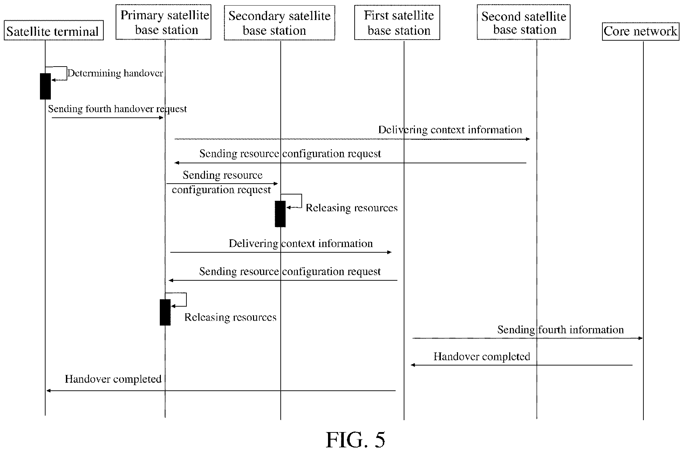

Referring to FIG. 5, specifically, when the target satellite base station includes a first satellite base station and a second satellite base station, the access priority level of the first satellite base station is higher than the access priority level of the primary satellite base station, and the access priority level of the second satellite base station is between the access priority level of the secondary satellite base station and the access priority level of the primary satellite base station, the following steps are performed to replace the primary satellite base station with the first satellite base station and replace the secondary satellite base station with the second satellite base station:
initiating, by the satellite terminal, a fourth handover request to the primary satellite base station, wherein the fourth handover request includes identity information of the first satellite base station and the second satellite base station;
determining, by the primary satellite base station, the first satellite base station and the second satellite base station from the satellite base stations according to the identity information of the first satellite base station and the second satellite base station, and transmitting the context information to the first satellite base station and the second satellite base station; and
transmitting, by the first satellite base station, fourth information to the core network to cause a data link between the core network and the primary satellite base station to be handed over to the first satellite base station and a data link between the core network and the secondary satellite base station to be handed over to the second satellite base station, wherein the fourth information includes a fifth terminal identifier allocated to the satellite terminal by the first satellite base station, a sixth terminal identifier allocated to the satellite terminal by the second satellite base station, and identity information of the first satellite base station and the second satellite base station.

Furthermore, the primary satellite base station transmits the corresponding context information to the first satellite base station and the second satellite base station, enabling the first satellite base station and the second satellite base station to jointly provide services for the satellite terminal. Specifically, the first satellite base station serves as the new primary satellite base station, and the second satellite base station serves as the new secondary satellite base station.

During the handover process, the first satellite base station and the second satellite base station each initiate a resource configuration request to the primary satellite base station. Upon receiving the resource configuration request from the second satellite base station, the primary satellite base station forwards this request to the secondary satellite base station. The secondary satellite base station, upon receiving the resource configuration request from the primary satellite base station, releases its own resources. The primary satellite base station, upon receiving the resource configuration request from the first satellite base station, releases its own resources.

It should be understood that the third terminal identifier, the fourth terminal identifier, and the fifth terminal identifier are all RAN-UE-NGAP-IDs allocated to the satellite terminal by the corresponding satellite base station. The second information, the third information, and the fourth information are transmitted via a path switch.

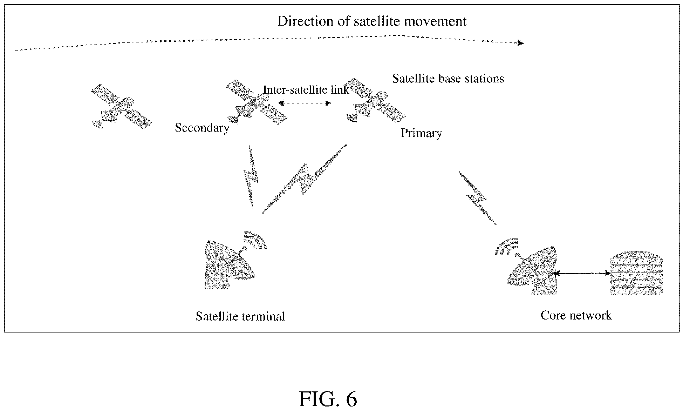

Referring to FIG. 6, the present application further discloses a satellite communication system configured to perform the access method for multi-satellite cooperative communication as described above. The satellite communication system includes a satellite terminal, a plurality of satellite base stations, and a core network. The aforementioned components perform the respective tasks corresponding to their parts in the access method for multi-satellite cooperative communication.

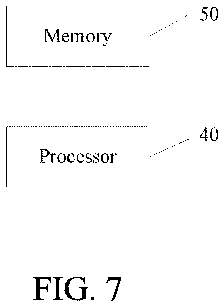

Referring to FIG. 7, the present application further discloses an electronic device, including:
a processor 40; and
a memory 50, having executable instructions of the processor 40 stored therein;
wherein the processor 40 is configured to perform the access method for multi-satellite cooperative communication as described above by executing the executable instructions.

The present application further provides a computer-readable storage medium having a program stored thereon, wherein the program, when executed by a processor, implements the access method for multi-satellite cooperative communication as described above.

An embodiment of the present application further discloses a computer program product or a computer program, including computer instructions stored on a computer-readable storage medium. The processor of an electronic device reads the computer instructions from the computer-readable storage medium, and the execution of these computer instructions by the processor causes the electronic device to perform the access method for multi-satellite cooperative communication as described above.

It should be understood that in the embodiments of the present application, the term "processor" may refer to a central processing unit (CPU), or may be other general-purpose processors, digital signal processors (DSP), application specific integrated circuits (ASIC), field-programmable gate arrays (FPGA), or other programmable logic devices, discrete gate or transistor logic devices, discrete hardware components, etc. A general-purpose processor may be a microprocessor, or any conventional processor, etc.

Those of ordinary skill in the art can understand that all or part of the processes in the methods of the above embodiments can be implemented by hardware related to computer program instructions. The program may be stored in a computer-readable storage medium. When executed, the program may include the processes of the embodiments of the methods described above. The storage medium may be a magnetic disk, an optical disk, a read-only memory (ROM), or a random access memory (RAM), etc.

The embodiments disclosed above are merely preferred embodiments of the present application and are not intended to limit the scope of the present application. Therefore, equivalent changes made based on the claims of the present application shall fall within the scope covered by the present application.

## Claims

1. An access method for multi-satellite cooperative communication, comprising:
determining, by a satellite terminal, a primary satellite base station and a secondary satellite base station from a plurality of satellite base stations;
transmitting, by the satellite terminal, first information to the primary satellite base station and the secondary satellite base station, wherein the first information comprises identity information of the primary satellite base station and the secondary satellite base station;
determining, by the primary satellite base station and the secondary satellite base station, an identity of each other according to the first information, and establishing a communication connection;
allocating, by the primary satellite base station, a first terminal identifier to the satellite terminal, allocating, by the secondary satellite base station, a second terminal identifier to the satellite terminal, and transmitting the second terminal identifier to the primary satellite base station;
transmitting, the primary satellite base station, registration information to a core network, wherein the registration information comprises a first terminal identifier, a second terminal identifier, and the first information; and
determining, by the core network, the primary satellite base station, the secondary satellite base station, and the satellite terminal according to the registration information, and transmitting context information corresponding to the satellite terminal to the primary satellite base station, wherein the secondary satellite base station synchronizes the context information.

2. The access method for multi-satellite cooperative communication according to claim 1, wherein said "determining, by a satellite terminal, a primary satellite base station and a secondary satellite base station from a plurality of satellite base stations" comprises:
acquiring, by the satellite terminal, access parameters of the plurality of satellite base stations, wherein the access parameters comprise at least one of ephemeris information and elevation angle information;
determining an access priority level for each of the satellite base stations according to the access parameters; and
determining the primary satellite base station and the secondary satellite base station based on the access priority level of each of the satellite base stations, wherein the access priority level of the primary satellite base station is higher than that of the secondary satellite base station, and the access priority level of the secondary satellite base station is higher than that of other satellite base stations excluding the primary satellite base station.

3. The access method for multi-satellite cooperative communication according to claim 2, further comprising:
when a target satellite base station exists in the plurality of satellite base stations, and the access priority level of the target satellite base station is higher than that of the primary satellite base station or that of the secondary satellite base station, initiating, by the satellite terminal, a handover request to replace the primary satellite base station or the secondary satellite base station with the target satellite base station.

4. The access method for multi-satellite cooperative communication according to claim 3, further comprising:
upon completion of replacement, initiating, by the target satellite base station, a resource configuration request to the primary satellite base station or the secondary satellite base station that is replaced; and
releasing, by the primary satellite base station or the secondary satellite base station that is replaced, resources according to the resource configuration request.

5. The access method for multi-satellite cooperative communication according to claim 3 or 4, wherein
when the access priority level of the target satellite base station is between that of the secondary satellite base station and that of the primary satellite base station, performing the following steps to replace the secondary satellite base station with the target satellite base station:
initiating, by the satellite terminal, a first handover request to the primary satellite base station, wherein the first handover request carries identity information of the target satellite base station;
initiating, by the primary satellite base station, a second handover request to the secondary satellite base station, wherein the second handover request carries identity information of the satellite terminal and the target satellite base station;
determining, by the secondary satellite base station, the target satellite base station from the satellite base stations according to the identity information of the target satellite base station, and transmitting the context information to the target satellite base station; and
transmitting, by the primary satellite base station, second information to the core network to cause a data link between the core network and the secondary satellite base station to be handed over to the target satellite base station, wherein the second information comprises the first terminal identifier, a third terminal identifier allocated to the satellite terminal by the target satellite base station, and identity information of the primary satellite base station and the target satellite base station.

6. The access method for multi-satellite cooperative communication according to claim 3 or 4, wherein
when the access priority level of the target satellite base station is higher than that of the primary satellite base station, performing the following steps to replace the primary satellite base station with the target satellite base station:
initiating, by the satellite terminal, a third handover request to the primary satellite base station, wherein the third handover request carries identity information of the target satellite base station;
determining, by the primary satellite base station, the target satellite base station from the satellite base stations according to the identity information of the target satellite base station, and transmitting the context information to the target satellite base station; and
transmitting, by the target satellite base station, third information to the core network to cause a data link between the core network and the primary satellite base station to be handed over to the target satellite base station, wherein the third information comprises the second terminal identifier, a fourth terminal identifier allocated to the satellite terminal by the target satellite base station, and identity information of the target satellite base station and the secondary satellite base station.

7. The access method for multi-satellite cooperative communication according to claim 3, wherein
when the target satellite base station comprises a first satellite base station and a second satellite base station, the access priority level of the first satellite base station is higher than that of the primary satellite base station, and the access priority level of the second satellite base station is between that of the secondary satellite base station and that of the primary satellite base station, performing the following steps to replace the primary satellite base station with the first satellite base station and replace the secondary satellite base station with the second satellite base station:
initiating, by the satellite terminal, a fourth handover request to the primary satellite base station, wherein the fourth handover request comprises identity information of the first satellite base station and the second satellite base station;
determining, by the primary satellite base station, the first satellite base station and the second satellite base station from the satellite base stations according to the identity information of the first satellite base station and the second satellite base station, and transmitting the context information to the first satellite base station and the second satellite base station; and
transmitting, by the first satellite base station, fourth information to the core network to cause a data link between the core network and the primary satellite base station to be handed over to the first satellite base station and a data link between the core network and the secondary satellite base station to be handed over to the second satellite base station, wherein the fourth information comprises a fifth terminal identifier allocated to the satellite terminal by the first satellite base station, a sixth terminal identifier allocated to the satellite terminal by the second satellite base station, and identity information of the first satellite base station and the second satellite base station.

8. A satellite communication system, wherein the satellite communication system is configured to perform the access method for multi-satellite cooperative communication according to any of claims 1-7.

9. An electronic device, comprising:
a processor; and
a memory, having executable instructions of the processor stored therein;
wherein the processor is configured to perform the access method for multi-satellite cooperative communication according to any of claims 1-7 by executing the executable instructions.

10. A computer-readable storage medium, having a program stored thereon, wherein the program, when executed by a processor, implements the access method for multi-satellite cooperative communication according to any of claims 1-7.
